# EUROPEAN PATENT APPLICATION

(11) **EP 4 738 510 A1**
(43) Date of publication of application: **06.05.2026**
(21) Application number: 25204859.0
(22) Date of filing: 26.09.2025
(51) Int. Cl.: H01M 10/0562

(54) **ALL-SOLID-STATE BATTERY AND APPLICATION THEREOF**

(30) Priority: 31.10.2024 CN 202411545109
(71) Applicant: AESC Japan Ltd., Yokohama-shi, Kanagawa 220-0012 (JP)
(72) Inventor: YU, Le, Pudong New Area Shanghai, 201315 (CN); WU, Ming, Pudong New Area Shanghai, 201315 (CN)
(74) Representative: Becker, Eberhard

(57) **Abstract**

Provided are an all-solid-state battery (10) and application thereof, and the all-solid-state battery (10) at least includes: at least two first solid electrolyte layers (131), respectively disposed on a positive electrode (11) side and a negative electrode (12) side of the all-solid-state battery (10), an ionic conductivity of a first solid electrolyte layer (131) is 1×10⁻³S/cm to 1×10⁻²S/cm; and a second solid electrolyte layer (132), disposed between the two first solid electrolyte layers (131), an ionic conductivity of the second solid electrolyte layer (132) is 1×10⁻³S/cm to 2×10⁻²S/cm. Through the all-solid-state battery and application thereof provided by the disclosure, the lithium dendrite penetration resistance performance of the solid electrolyte membrane in the all-solid-state battery may be improved, the interfacial stability between the solid electrolyte membrane and the negative electrode may be improved, thereby enhancing the cycle performance and safety of the battery.

## Description

### BACKGROUND

### Technical Field

The disclosure relates to the field of battery technology, particularly relates to an all-solid-state battery and application thereof.

### Related Art

All-solid-state batteries have received widespread attention due to the adoption of solid electrolyte membranes with high energy density, good safety, and strong durability. In solid electrolyte membranes, sulfide solid electrolytes have been widely applied due to the significant room temperature ionic conductivity and processability thereof. However, in practical applications, sulfide solid electrolytes have problems such as poor lithium dendrite penetration resistance performance and poor interfacial stability with lithium metal negative electrodes, which significantly restrict the development of all-solid-state batteries.

### SUMMARY

The disclosure provides an all-solid-state battery and application thereof, through the all-solid-state battery and application thereof provided by the disclosure, the lithium dendrite penetration resistance performance of the solid electrolyte membrane in the all-solid-state battery may be improved, the interfacial stability between the solid electrolyte membrane and the negative electrode may be improved, thereby enhancing the cycle performance and safety of the battery.

To solve the above technical problems, the disclosure provides an all-solid-state battery, at least including:
at least two first solid electrolyte layers are provided, respectively disposed on a positive electrode side and a negative electrode side of the all-solid-state battery, in which an ionic conductivity of a first solid electrolyte layer is 1×10⁻³S/cm to 1×10⁻²S/cm, and
a second solid electrolyte layer is provided, disposed between the two first solid electrolyte layers, in which an ionic conductivity of the second solid electrolyte layer is 1×10⁻³S/cm to 2×10⁻²S/cm.

In one example of the disclosure, the first solid electrolyte layer includes a first electrolyte, in which a chemical formula of the first electrolyte is LiₐP_{1-b}M_{b}S_{c}O_{d}Xₑ, 5<a<6, 0<b<1, 1.5<c<5, 0<d<2.5, 4<c+d<5, 1<e<2, M is selected from at least one of Al, Ga, In, Ti, Sc, As, Sb, Bi, As, V, or Nb, and X is selected from at least one of Cl, Br, or I.

In one example of the disclosure, M is selected from at least one of Sb, In, or Bi, X is Cl, and a range of b is 0<b<0.1.

In one example of the disclosure, the first solid electrolyte layer includes a first electrolyte, a chemical formula of the first electrolyte is Li_{f}P_{1-g}E_{g}S_{w}O_{g}Q_{z}, 5<f<10, 0<g<1, 3<w<6, 4<w+g<6, 0<z<2, E is selected from at least one of Mg, Ca, Sr, Ba, Zn, Cr, Sn, or Pb, and Q is selected from at least one of Cl, Br, or I.

In one example of the disclosure, E is Mg, Q is Cl, and a range of g is 0.01<g<0.1.

In one example of the disclosure, the second solid electrolyte layer includes the first electrolyte and a second electrolyte, a chemical formula of the second electrolyte is Li₁₀Ge₁₋ᵢGᵢP₂S₁₂, 0≤i<1, and G is selected from at least one of Si or Sn.

In one example of the disclosure, in the second solid electrolyte layer, a content of the first electrolyte is 1wt% to 95wt%, and a content of the second electrolyte is 5wt% to 99wt%.

In one example of the disclosure, a thickness of the first solid electrolyte layer is 1µm to 120µm.

In one example of the disclosure, a thickness of the second solid electrolyte layer is 1µm to 100µm.

The disclosure further provides an electronic device, which includes the all-solid-state battery.

In summary, the disclosure provides an all-solid-state battery and application thereof, through improving the solid electrolyte membrane in the all-solid-state battery, the interfacial stability between the solid electrolyte membrane and the negative electrode may be improved, thereby reducing interfacial impedance and improving charge transfer efficiency. The lithium dendrite penetration resistance performance of the solid electrolyte membrane may be improved, avoiding battery short circuit and ensuring that the battery can operate stably and safely under high rate. The ionic conductivity of the solid electrolyte membrane may be improved, thereby improving the working efficiency of the battery. Moreover, the cycle performance of the battery may be improved and the service life of the battery may be extended.

### BRIEF DESCRIPTION OF THE DRAWINGS

In order to more clearly illustrate the technical solutions of the examples of the disclosure, the drawings required for describing the examples will be briefly introduced below. Certainly, the drawings described below are merely some examples of the disclosure. For persons of ordinary skill in the art, other drawings may also be obtained according to these drawings without creative work.

FIG.1 is a structural diagram of an all-solid-state battery in one example of the disclosure.
FIG.2 is a process schematic diagram of preparing a first solid electrolyte layer and a second solid electrolyte layer in one example of the disclosure.
FIG.3 is a scanning electron microscope image of a solid electrolyte membrane in one example of the disclosure.
FIG.4 is a result diagram of room temperature cycle performance test conducted on the all-solid-state battery in Example 3 of the disclosure.

Descriptions of reference numerals:
10. all-solid-state battery; 11. positive electrode; 12. negative electrode; 13. solid electrolyte membrane; 131. first solid electrolyte layer; 132. second solid electrolyte layer.

### DESCRIPTION OF THE EMBODIMENTS

The following specific examples illustrate the implementation methods of the disclosure. Persons skilled in the art may easily understand other advantages and effects of the disclosure from the content disclosed in this specification. The disclosure may also be implemented or applied through other different specific examples, and various details in this specification may also be modified or changed based on different viewpoints and applications without departing from the spirit of the disclosure.

It should be understood that the disclosure may be implemented in different forms and should not be interpreted as being limited to the examples presented herein. On the contrary, providing these examples will make the disclosure thorough and complete, and will fully convey the range of the disclosure to persons skilled in the art.

The technical solution of the disclosure will be described in further detail below in combination with examples. Certainly, the described examples are merely part of the examples of the disclosure, not all examples. Based on the examples in the disclosure, all other examples obtained by persons of ordinary skill in the art without creative work fall within the scope of protection of the disclosure.

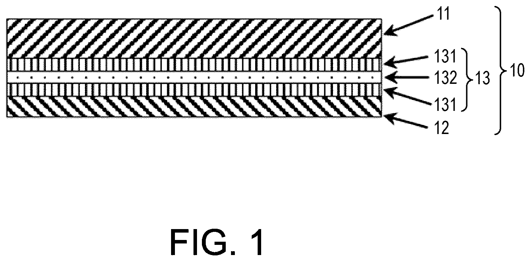

Referring to FIG.1, the disclosure provides an all-solid-state battery 10, including, for example, a positive electrode 11, a negative electrode 12, and a solid electrolyte membrane 13, in which the solid electrolyte membrane 13 is disposed between the positive electrode 11 and the negative electrode 12, and the solid electrolyte membrane 13 includes, for example, at least two first solid electrolyte layers 131 and a second solid electrolyte layer 132, at least one first solid electrolyte layer 131 is disposed on each of the positive electrode 11 side and the negative electrode 12 side, and the second solid electrolyte layer 132 is disposed between the two first solid electrolyte layers 131. In the all-solid-state battery 10 provided by the disclosure, both the lithium dendrite penetration resistance performance of the solid electrolyte membrane 13 and the interfacial stability performance with the negative electrode 12 may be improved. Specifically, the first solid electrolyte layer 131 may improve the interfacial stability between the solid electrolyte membrane 13 and the negative electrode 12 to ensure continuous and stable lithium ion transport channels, and the second solid electrolyte layer 132 may consume the generated lithium dendrites, prevent penetration of lithium dendrites, avoid short circuit of the all-solid-state battery 10, thereby ensuring that the all-solid-state battery 10 may still operate stably and safely under high rate. In the disclosure, the all-solid-state battery 10 is, for example, a primary battery or a secondary battery, and the secondary battery is, for example, a pouch battery, a prismatic battery, or a cylindrical battery. The disclosure does not specifically limit the kind and type of the all-solid-state battery 10.

Referring to FIG.1, in one example of the disclosure, the positive electrode 11 includes, for example, a positive electrode active material, a solid electrolyte, a conductive agent, and a binder, in which the positive electrode active material is, for example, selected from at least one of lithium nickel cobalt manganese oxide (NCM), lithium nickel oxide (LNO), lithium manganese oxide (LMO), lithium nickel manganese oxide (LNMO), lithium cobalt oxide (LCO), or lithium nickel cobalt aluminum oxide (NCA), and the solid electrolyte is, for example, a halide electrolyte that does not generate heat-producing reactions with the positive electrode active material to improve the safety of the battery. The conductive agent is, for example, selected from at least one of conductive carbon black (Super P), nano carbon fiber (Vapor-grown carbon fiber, VGCF), acetylene black, carbon nanotubes, or graphene. The binder is, for example, selected from at least one of polytetrafluoroethylene (PTFE), polyvinylidene fluoride, polyethylene oxide, polyamide, polyacrylonitrile, polyacrylate, polyvinyl ether, polymethyl methacrylate, ethylene-propylene-diene terpolymer, polyhexafluoropropylene, or styrene-butadiene rubber, in which the disclosure does not limit the mass ratio of the positive electrode active material, the solid electrolyte, the conductive agent, and the binder, which may be selected according to actual needs.

Referring to FIG.1, in one example of the disclosure, the positive electrode active material is, for example, LiNi_{0.8}Co_{0.1}Mn_{0.1}O₂, the chemical formula of the halide electrolyte is, for example, Li_{2.35}Zr_{0.65}Fe_{0.35}Cl₅Br_{0.5}I_{0.5}, the conductive agent includes, for example, Super P and VGCF, and the mass ratio of Super P and VGCF is, for example, 1:1. The binder is, for example, PTFE, after mixing the positive electrode active material, the halide solid electrolyte, the conductive agent, and the binder uniformly according to a mass ratio of, for example, 69:29:1:1, and the positive electrode 11 is obtained through dry pressing.

Referring to FIG.1, in one example of the disclosure, the negative electrode 12 is, for example, metallic lithium.

Referring to FIG.1, in one example of the disclosure, in the solid electrolyte membrane 13, there are, for example, two first solid electrolyte layers 131, one first solid electrolyte layer 131 is disposed on each of the positive electrode 11 side and the negative electrode 12 side, and a second solid electrolyte layer 132 is disposed between the two first solid electrolyte layers 131, in which the thickness of the solid electrolyte membrane 13 is, for example, 5µm to 300µm, and the ionic conductivity is, for example, 1×10⁻⁴S/cm to 2×10⁻²S/cm. By using composite multilayer solid electrolyte layers as the solid electrolyte membrane 13, the ionic conductivity of the solid electrolyte membrane 13 may be improved, thereby improving the working efficiency of the all-solid-state battery 10. Specifically, in the solid electrolyte membrane 13, the thickness of the first solid electrolyte layer 131 is, for example, 1µm to 120µm, the ionic conductivity is, for example, 1×10⁻³S/cm to 1×10⁻²S/cm, the thickness of the second solid electrolyte layer 132 is, for example, 1µm to 100µm, and the ionic conductivity is, for example, 1×10⁻³S/cm to 2×10⁻²S/cm. By controlling the thickness of the solid electrolyte membrane 13, the first solid electrolyte layer 131, and the second solid electrolyte layer 132, the cycle performance of the all-solid-state battery 10 may be improved, thereby extending the service life of the battery.

Referring to FIG.1, in one example of the disclosure, the first solid electrolyte layer 131 includes a first electrolyte, and the first electrolyte is, for example, a reduction-resistant sulfide electrolyte, which may improve the interfacial stability between the solid electrolyte membrane 13 and the negative electrode 12, ensure continuous and stable lithium ion transport channels, reduce interfacial impedance, and improve charge transfer efficiency. Specifically, the chemical formula of the first electrolyte is, for example, selected from at least one of LiₐP_{1-b}M_{b}S_{c}O_{d}Xₑ or Li_{f}P_{1-g}E_{g}S_{w}O_{g}Q_{z}. In an example, in LiₐP_{1-b}M_{b}S_{c}O_{d}Xₑ, 5<a<6, 0<b<1, 1.5<c<5, 0<d<2.5, 4<c+d<5, 1<e<2, M is selected from at least one of Al, Ga, In, Ti, Sc, As, Sb, Bi, As, V, or Nb, and X is selected from at least one of Cl, Br, or I. Further, M is, for example, selected from at least one of Sb, In, or Bi, X is Cl, and the range of b is, for example, 0<b<0.1. More specifically, when M is, for example, a +5 valence element, b is, for example, 0.04, when M is, for example, a +3 valence element, b is, for example, 0.02. By controlling the types of M and X elements and the range of b in the first electrolyte, the cycle performance of the all-solid-state battery 10 may be enhanced, thereby extending the service life of the battery.

Referring to FIG.1, in one example of the disclosure, when the chemical formula of the first electrolyte is Li_{f}P_{1-g}E_{g}S_{w}O_{g}Q_{z}, 5<f<10, 0<g<1, 3<w<6, 4<w+g<6, 0<z<2, E is, for example, selected from at least one of Mg, Ca, Sr, Ba, Zn, Cr, Sn, or Pb, and Q is, for example, selected from at least one of Cl, Br, or I. Further, E is, for example, Mg, Q is, for example, Cl, the range of g is, for example, 0.01≤g≤0.1. Specifically, g is, for example, 0.02. By controlling the type of E element, the type of Q element, and the range of g in the first electrolyte, the cycle performance of the all-solid-state battery 10 may be enhanced, thereby extending the service life of the battery.

Referring to FIG.1, in one example of the disclosure, when preparing the first solid electrolyte layer 131, first, under an atmosphere of inert gas such as argon, according to the chemical formula LiₐP_{1-b}M_{b}S_{c}O_{d}Xₑ or Li_{f}P_{1-g}E_{g}S_{w}O_{g}Q_{z} of the first electrolyte, the Li source, P source, M source, S source, and X source, or, the Li source, P source, E source, S source, and Q source are mixed uniformly according to stoichiometry, for example placed in a ball mill jar for ball milling treatment to obtain precursor powder, then the precursor powder is subjected to high-temperature annealing and sintering to obtain the first electrolyte. In an example, the Li source is, for example, selected from at least one of Li₂S, LiCl, LiBr, or Lil, the P source is, for example, P₂S₅, the M source is, for example, oxide of M, the S source is, for example, from at least one of the Li source or P source, the X source is, for example, from the Li source, the E source is, for example, oxide of E, the Q source is, for example, from the Li source, the ball-to-material mass ratio is, for example, (1 to 100):1, the ball milling time is, for example, 1h to 48h, the rotation speed is, for example, 50rpm to 1500rpm, the sintering temperature is, for example, 400°C to 600°C, and the sintering time is, for example, 1h to 48h. After obtaining the first electrolyte, the first solid electrolyte layer 131 is prepared by, for example, powder extrusion molding method, wet coating method, or electrostatic spraying method.

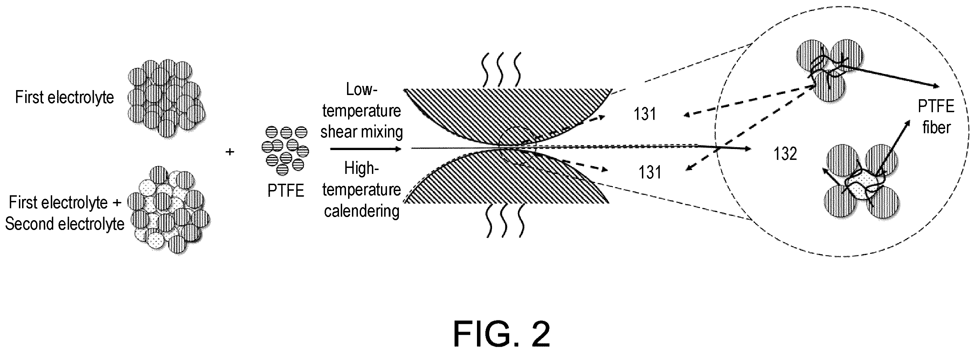

Referring to FIG.2, in one example of the disclosure, when adopting powder extrusion molding method to prepare the first solid electrolyte layer 131, first, the first electrolyte and the first binder are mixed uniformly by, for example, low-temperature shear mixing, then rapidly heated for high-temperature shear mixing to obtain mixed material, then the mixed material is added into a roller press for high-temperature calendaring to obtain the first solid electrolyte layer 131. In an example, the first binder is, for example, selected from at least one of PTFE, ethylene tetrafluoroethylene (ETFE), fluorinated ethylene propylene (FEP), polyfluoroalkoxy resin (PFA), polychlorotrifluoroethylene (PCTFE), ethylene-chlorotrifluoroethylene copolymer (ECTFE), polyvinylidene fluoride (PVDF), polyvinylidene fluoride-hexafluoropropylene copolymer, or polyvinylidene fluoride-trifluorochloroethylene copolymer, the content of the first electrolyte in the mixed material is, for example, 95wt% to 99.9wt%, the content of the first binder in the mixed material is, for example, 0.1wt% to 5wt%, the temperature of low-temperature shear mixing is, for example, -30°C to 15°C, the temperature of high-temperature shear mixing is, for example, 20°C to 200°C, and the temperature of high-temperature calendaring is, for example, 20°C to 200°C.

Referring to FIG.1, in another example of the disclosure, when adopting wet coating method or electrostatic spraying method to prepare the first solid electrolyte layer 131, first, the first electrolyte, a second binder, and a solvent are mixed uniformly to obtain mixed component, then the mixed component is coated on substrate through wet coating or electrostatic spraying method, then high-temperature drying is performed on the substrate coated with the mixed component to obtain the first solid electrolyte layer 131. In an example, the second binder is, for example, selected from at least one of PVDF, carboxymethyl cellulose (CMC), polymerized styrene butadiene rubber (SBR), polyvinyl pyrrolidone (PVP), polymethyl methacrylate (PMMA), polyacrylonitrile (PAN), polyacrylic acid (PAA), polyurethane, polyvinyl alcohol (PVA), sodium alginate (Alg), ethylene-propylene-diene monomer, styrene-butadiene rubber, polyvinylidene fluoride, fluororubber, β-cyclodextrin (β-CDp), polypropylene emulsion (LA132), PTFE, ETFE, FEP, PFA, PCTFE, ECTFE, polyvinylidene fluoride-hexafluoropropylene copolymer, or vinylidene fluoride-trifluorochloroethylene copolymer, the solvent is, for example, selected from at least one of toluene, chlorobenzene, xylene, dimethyl carbonate, N-methylformamide, n-hexane, ethylene glycol dimethyl ether, dibutyl ether, ethanol, 1,2-ethylenediamine, 1,2-ethanedithiol, acetonitrile, tetrahydrofuran, methanol, diisopropyl ether, acetone, hexene, ethyl acetate, benzyl acetate, butyl butyrate, or diisobutyl ketone, the content of the first electrolyte in the mixed component is, for example, 30wt% to 90wt%, the content of the second binder in the mixed component is, for example, 0.1wt% to 10wt%, the content of the solvent in the mixed component is, for example, 10wt% to 50wt%, the substrate is, for example, selected from Polyethylene glycol terephthalate (PET) film, smooth aluminum foil, or release paper, and the temperature of high-temperature drying is, for example, 30°C to 250°C.

Referring to FIG.1, in one example of the disclosure, the second solid electrolyte layer 132 include the first electrolyte and the second electrolyte, and the first electrolyte is the same as the first electrolyte in the first solid electrolyte layer 131, so details will not be repeated here. The second electrolyte is, for example, lithium reduction reaction type sulfide electrolyte, which may consume the generated lithium dendrites, prevent the penetration of lithium dendrites, avoid short circuit of the all-solid-state battery 10, and ensure that the all-solid-state battery 10 may still operate stably and safely under high rate. Specifically, in the second solid electrolyte layer 132, the content of the first electrolyte is, for example, 1wt%-95wt%, and the content of the second electrolyte is, for example, 5wt% to 99wt%. The chemical formula of the second electrolyte is, for example, Li₁₀Ge₁₋ᵢGᵢP₂S₁₂, in which, 0≤i<1, and G is selected from at least one of Si or Sn. Specifically, in the present example, i is, for example, 0. By controlling the value of i, the cycle performance of the all-solid-state battery 10 may be improved, thereby extending the service life of the battery.

Referring to FIG.1 to FIG.2, in one example of the disclosure, when preparing the second solid electrolyte layer 132, first, under the atmosphere of inert gas such as argon, according to the chemical formula Li₁₀Ge₁₋ᵢGᵢP₂S₁₂ of the second electrolyte, the Li source, Ge source, G source, P source, and S source are mixed uniformly according to stoichiometry, for example placed in a ball milling jar for ball milling treatment to obtain the second electrolyte precursor powder, then the second electrolyte precursor powder is subjected to high-temperature annealing and sintering to obtain the second electrolyte. In an example, the Li source is, for example, Li₂S, the Ge source is, for example, GeS₂, the G source is, for example, sulfide of G, the P source is, for example, P₂S₅, the S source is, for example, from at least one of the Li source, Ge source, G source, or P source, the ball-to-material mass ratio is, for example, (1 to 100):1, the ball milling time is, for example, 1h to 48h, the rotation speed is, for example, 50rpm to 1000rpm, the sintering temperature is, for example, 500°C to 800°C, and the sintering time is, for example, 1h to 48h. Next, the first electrolyte is prepared according to the chemical formula of the first electrolyte, in which the preparation process of the first electrolyte is the same as the preparation process of the first electrolyte in the first solid electrolyte layer 131, so details will not be repeated here. After obtaining the first electrolyte and the second electrolyte, the first electrolyte and the second electrolyte are mixed uniformly to obtain mixed electrolyte material, then the second solid electrolyte layer 132 is prepared by, for example, powder extrusion molding method, wet coating method, or electrostatic spraying method, in which the process of preparing the second solid electrolyte layer 132 by powder extrusion molding method, wet coating method, or electrostatic spraying method is the same as the process of preparing the first solid electrolyte layer 131 by powder extrusion molding method, wet coating method, or electrostatic spraying method, so details will not be repeated here.

Referring to FIG.1, in one example of the disclosure, when preparing the solid electrolyte membrane 13, the first solid electrolyte layer 131, second solid electrolyte layer 132, and the first solid electrolyte layer 131 are sequentially subjected to calendaring to be formed into a composite solid electrolyte membrane 13.

Referring to FIG.1, in one example of the disclosure, the positive electrode 11, solid electrolyte membrane 13, and negative electrode 12 are sequentially subjected to stacking, packaging, hot pressing, and cold pressing processes to be assembled into the all-solid-state battery 10.

Hereinafter, the disclosure will be explained more specifically by referring to examples, and the examples should not be understood as limiting. Some modifications may be made within the range consistent with the gist of the disclosure, all of which fall within the technical scope of the disclosure.

### Example 1

Preparation of the first electrolyte: Under an atmosphere of argon, 2 mol of Li₂S, 1.5 mol of LiCl, 0.48 mol of P₂S₅, and 0.02 mol of Sb₂O₅ are subjected to high-energy ball milling to prepare Li_{5.5}P_{0.96}Sb_{0.04}S_{4.40}O_{0.10}Cl_{1.5} precursor powder, then the precursor powder is sintered at a temperature of 500°C for 10h, and after cooling, Li_{5.5}P_{0.96}Sb_{0.04}S_{4.40}O_{0.10}Cl_{1.5} electrolyte material is obtained.

Preparation of the second electrolyte: Under an atmosphere of argon, 5 mol of Li₂S, 1 mol of P₂S₅, and 1 mol of GeS₂ are subjected to high-energy ball milling to prepare Li₁₀GeP₂S₁₂ precursor powder, then the precursor powder is sintered at a temperature of 600°C for 10h, and after cooling, Li₁₀GeP₂S₁₂ electrolyte material is obtained.

Preparation of the first solid electrolyte layer: Li_{5.5}P_{0.96}Sb_{0.04}S_{4.40}O_{0.10}Cl_{1.5} electrolyte material and PTFE are mixed uniformly according to a mass ratio of 99:1 at -20°C, and the temperature is raised to 80°C to fibrillate PTFE, obtaining Li_{5.5}P_{0.96}Sb_{0.04}S_{4.40}O_{0.10}Cl_{1.5}&PTFE mixed material for preparing the first solid electrolyte layer. Then the Li_{5.5}P_{0.96}Sb_{0.04}S_{4.40}O_{0.10}Cl_{1.5}&PTFE mixed material is extruded into a roller press, at 80°C, by adjusting the roller press gap, the electrolyte membrane is roller pressed to a thickness of 15µm to form the first solid electrolyte layer.

Preparation of the second solid electrolyte layer: 5wt% of Li₁₀GeP₂S₁₂ electrolyte material and 95wt% of Li_{5.5}P_{0.96}Sb_{0.04}S_{4.40}O_{0.10}Cl_{1.5} electrolyte material are mixed uniformly to obtain mixed electrolyte material. Then, the mixed electrolyte material and PTFE are mixed uniformly according to a mass ratio of 99:1 at -20°C, and the temperature is raised to 80°C to fibrillate PTFE, obtaining mixed material for preparing the second solid electrolyte layer. Then the mixed material is extruded into a roller press, at 80°C, by adjusting the roller press gap, the electrolyte membrane is roller pressed to a thickness of 5µm to form the second solid electrolyte layer.

Preparation of solid electrolyte membrane: The first solid electrolyte layer, the second solid electrolyte layer, and the first solid electrolyte layer are sequentially subjected to calendaring in a roller press to be formed into a composite solid electrolyte membrane.

Preparation of positive electrode: LiNi_{0.8}Co_{0.1}Mn_{0.1}O₂ positive electrode active material, Li_{2.35}Zr_{0.65}Fe_{0.35}Cl₅Br_{0.5}I_{0.5} halide solid electrolyte, the conductive agent, and PTFE are mixed uniformly according to a mass ratio of, for example, 69:29:1:1, and then the positive electrode is obtained by dry pressing, in which the conductive agent includes Super P and VGCF, and the mass ratio of Super P and VGCF is, for example, 1:1.

Selection of negative electrode: Metallic lithium is selected as the negative electrode.

Preparation of battery: The positive electrode, solid electrolyte membrane, and negative electrode are sequentially subjected to stacking, packaging, hot pressing, and cold pressing processes to be assembled into an all-solid-state pouch battery.

### Example 2

The difference between this example and Example 1 lies in that, in the second solid electrolyte layer, the content of the first electrolyte is 50wt%, the content of the second electrolyte is 50wt%, and others are the same as Example 1.

### Example 3

The difference between this example and Example 1 lies in that, in the second solid electrolyte layer, the content of the first electrolyte is 20wt%, and the content of the second electrolyte is 80wt%.

### Example 4

The difference between this example and Example 1 lies in that, in the second solid electrolyte layer, the content of the first electrolyte is 1wt%, and the content of the second electrolyte is 99wt%.

### Example 5

The difference between this example and Example 3 lies in that, the chemical formula of the second electrolyte is Li₁₀Ge_{0.5}Sn_{0.5}P₂S₁₂, and the raw materials are 1mol of Li₂S, 1mol of P₂S₅, 0.5mol of GeS₂, and 0.5mol of SnS₂.

### Example 6

The difference between this example and Example 3 lies in that, the chemical formula of the second electrolyte is Li₁₀Ge_{0.5}Si_{0.5}P₂S₁₂, and the raw materials are 1mol of Li₂S, 1mol of P₂S₅, 0.5mol of GeS₂, and 0.5mol of SiS₂.

### Example 7

The difference between this example and Example 3 lies in that, by adjusting the roll gap of the roller press, the thickness of the second solid electrolyte layer is adjusted to 1µm.

### Example 8

The difference between this example and Example 3 lies in that, by adjusting the roll gap of the roller press, the thickness of the second solid electrolyte layer is adjusted to 50µm.

### Example 9

The difference between this example and Example 3 lies in that, by adjusting the roll gap of the roller press, the thickness of the second solid electrolyte layer is adjusted to 100µm.

### Example 10

The difference between this example and Example 3 lies in that, by adjusting the roll gap of the roller press, the thickness of the first solid electrolyte layer is adjusted to 1µm.

### Example 11

The difference between this example and Example 3 lies in that, by adjusting the roll gap of the roller press, the thickness of the first solid electrolyte layer is adjusted to 50µm.

### Example 12

The difference between this example and Example 3 lies in that, by adjusting the roll gap of the roller press, the thickness of the first solid electrolyte layer is adjusted to 120µm.

### Example 13

The difference between this example and Example 3 lies in that, the chemical formula of the first electrolyte is Li_{5.5}P_{0.99}Sb_{0.01}S_{4.475}O_{0.025}Cl_{1.5}, and the raw materials are 2 mol of Li₂S, 1.5 mol of LiCl, 0.495 mol of P₂S₅, and 0.05 mol of Sb₂O₅.

### Example 14

The difference between this example and Example 3 lies in that, the chemical formula of the first electrolyte is Li_{5.5}P_{0.9}Sb_{0.1}S_{4.25}O_{0.25}Cl_{1.5}, and the raw materials are 2 mol of Li₂S, 1.5 mol of LiCl, 0.45 mol of P₂S₅, and 0.05 mol of Sb₂O₅.

### Example 15

The difference between this example and Example 3 lies in that, the chemical formula of the first electrolyte is Li_{5.5}P_{0.96}Sb_{0.04}S_{4.40}O_{0.10}Cl_{1.3}Br_{0.1}I_{0.1}, and the raw materials are 2 mol of Li₂S, 1.3 mol of LiCl, 0.1 mol of LiBr, 0.1 mol of Lil, 0.48 mol of P₂S₅, and 0.02 mol of Sb₂O₅.

### Example 16

The difference between this example and Example 3 lies in that, the chemical formula of the first electrolyte is Li_{5.52}P_{0.99}Bi_{0.01}S_{4.485}O_{0.015}Cl_{1.5}, and the raw materials are 2.01 mol of Li₂S, 1.5 mol of LiCl, 0.495 mol of P₂S₅, and 0.005 mol of Bi₂O₃.

### Example 17

The difference between this example and Example 3 lies in that, the chemical formula of the first electrolyte is Li_{5.54}P_{0.98}Bi_{0.02}S_{4.47}O_{0.03}Cl_{1.5}, and the raw materials are 2.02 mol of Li₂S, 1.5 mol of LiCl, 0.49 mol of P₂S₅, and 0.01 mol of Bi₂O₃.

### Example 18

The difference between this example and Example 3 lies in that, the chemical formula of the first electrolyte is Li_{5.7}P_{0.9}Bi_{0.1}S_{4.35}O_{0.15}Cl_{1.5}, and the raw materials are 2.1 mol of Li₂S, 1.5 mol of LiCl, 0.45 mol of P₂S₅, and 0.05 mol of Bi₂O₃.

### Example 19

The difference between this example and Example 3 lies in that, the chemical formula of the first electrolyte is Li_{5.54}P_{0.98}Bi_{0.02}S_{4.47}O_{0.03}Cl_{1.3}Br_{0.1}I_{0.1}, and the raw materials are 2.02 mol of Li₂S, 1.3 mol of LiCl, 0.1 mol of LiBr, 0.1 mol of Lil, 0.49 mol of P₂S₅, and 0.01 mol of Bi₂O₃.

### Example 20

The difference between this example and Example 3 lies in that, the chemical formula of the first electrolyte is Li_{5.52}P_{0.99}In_{0.01}S_{4.485}O_{0.015}Cl_{1.5}, and the raw materials are 2.01 mol of Li₂S, 1.5 mol of LiCl, 0.495 mol of P₂S₅, and 0.005 mol of In₂O₃.

### Example 21

The difference between this example and Example 3 lies in that, the chemical formula of the first electrolyte is Li_{5.54}P_{0.98}In_{0.02}S_{4.47}O_{0.03}Cl_{1.5}, and the raw materials are 2.02 mol of Li₂S, 1.5 mol of LiCl, 0.49 mol of P₂S₅, and 0.01 mol of In₂O₃.

### Example 22

The difference between this example and Example 3 lies in that, the chemical formula of the first electrolyte is Li_{5.7}P_{0.9}In_{0.1}S_{4.35}O_{0.15}Cl_{1.5}, and the raw materials are 2.1 mol of Li₂S, 1.5 mol of LiCl, 0.45 mol of P₂S₅, and 0.05 mol of In₂O₃.

### Example 23

The difference between this example and Example 3 lies in that, the chemical formula of the first electrolyte is Li_{5.54}P_{0.98}In_{0.02}S_{4.47}O_{0.03}Cl_{1.3}Br_{0.1}I_{0.1}, and the raw materials are 2.02 mol of Li₂S, 1.3 mol of LiCl, 0.1 mol of LiBr, 0.1 mol of Lil, 0.49 mol of P₂S₅, and 0.01 mol of In₂O₃.

### Example 24

The difference between this example and Example 3 lies in that, the chemical formula of the first electrolyte is Li_{5.53}P_{0.99}Mg_{0.01}S_{4.49}O_{0.01}Cl_{1.5}, and the raw materials are 2.015 mol of Li₂S, 1.5 mol of LiCl, 0.495 mol of P₂S₅, and 0.01 mol of MgO.

### Example 25

The difference between this example and Example 3 lies in that, the chemical formula of the first electrolyte is Li_{5.56}P_{0.98}Mg_{0.02}S_{4.48}O_{0.02}Cl_{1.5}, and the raw materials are 2.03 mol of Li₂S, 1.5 mol of LiCl, 0.49 mol of P₂S₅, and 0.02 mol of MgO.

### Example 26

The difference between this example and Example 3 lies in that, the chemical formula of the first electrolyte is Li_{5.8}P_{0.9}Mg_{0.1}S_{4.48}O_{0.1}Cl_{1.5}, and the raw materials are 2.15 mol of Li₂S, 1.5 mol of LiCl, 0.45 mol of P₂S₅, and 0.1 mol of MgO.

### Example 27

The difference between this example and Example 3 lies in that, the chemical formula of the first electrolyte is Li_{5.56}P_{0.98}Mg_{0.02}S_{4.48}O_{0.02}Cl_{1.3}Br_{0.1}I_{0.1}, and the raw materials are 2.03 mol of Li₂S, 1.3 mol of LiCl, 0.1 mol of LiBr, 0.1 mol of Lil, 0.49 mol of P₂S₅, and 0.02 mol of MgO.

### Example 28

The difference between this example and Example 3 lies in that, during the preparation process of the first solid electrolyte layer and the second solid electrolyte layer, the first binder selected is ETFE.

### Example 29

The difference between this example and Example 3 lies in that, during the preparation process of the first solid electrolyte layer and the second solid electrolyte layer, the first binder selected is PCTFE.

### Example 30

The difference between this example and Example 3 lies in that, the wet method coating process is adopted to prepare the first solid electrolyte layer and the second solid electrolyte layer.

Specifically, in this example, the preparation of the first solid electrolyte layer: Li_{5.5}P_{0.96}Sb_{0.04}S_{4.40}O_{0.10}Cl_{1.5} electrolyte material, SBR binder, and xylene solvent are mixed uniformly according to a mass ratio of 49:1:50 to obtain a mixed component, and the mixed component is coated on smooth aluminum foil using a 15µm film applicator, and vacuum dried at 80°C to prepare a 15µm thick Li_{5.5}P_{0.96}Sb_{0.04}S_{4.40}O_{0.10}Cl_{1.5} first solid electrolyte layer.

The preparation of the second solid electrolyte layer: 5wt% Li₁₀GeP₂S₁₂ electrolyte material and 95wt% Li_{5.5}P_{0.96}Sb_{0.04}S_{4.40}O_{0.10}Cl_{1.5} electrolyte material are mixed uniformly to obtain a mixed electrolyte material. Then, the mixed electrolyte material, SBR binder, and xylene solvent are mixed uniformly according to a mass ratio of 49:1:50 to prepare a mixed component, and the mixed component is coated on smooth aluminum foil using a 5µm film applicator, and vacuum dried at 80°C to prepare a 5µm thick second solid electrolyte layer.

### Example 31

The difference between this example and Example 30 lies in that, during the preparation process of the first solid electrolyte layer and the second solid electrolyte layer, the second binder selected is PVDF, and the others are the same as Example 30.

### Example 32

The difference between this example and Example 30 lies in that, during the preparation process of the first solid electrolyte layer and the second solid electrolyte layer, the second binder selected is PAA, and the others are the same as Example 30.

### Comparative Example 1

The difference between this comparative example and Example 3 lies in that, the chemical formula of the first electrolyte is Li_{5.5}PS_{4.5}Cl_{1.5}, and the raw materials are 2mol of Li₂S, 1.5mol of LiCl, and 0.5mol of P₂S₅.

### Comparative Example 2

The difference between this comparative example and Example 3 lies in that, the solid electrolyte membrane only includes two first solid electrolyte layers arranged in a stacked manner.

### Comparative Example 3

The difference between this comparative example and Example 3 lies in that, the solid electrolyte membrane only includes the second solid electrolyte layer.

The composition and parameters of the first solid electrolyte layer and the second solid electrolyte layer in each example and comparative example are as shown in Table 1.

**Table 1. Composition table of the first solid electrolyte layer and the second solid electrolyte layer in Examples 1 to 32 and Comparative Examples 1 to 3**

| Group | First solid electrolyte layer | | | Second solid electrolyte layer | | |
|---|---|---|---|---|---|---|
| | Chemical formula | Ionic conducti vity (S/cm) | Thick ness (µm) | Chemical formula | Ionic conduc tivity (S/cm) | Thick ness (µm) |
| Example 1 | Li_{5.5}P_{0.96}Sb_{0.04}S_{4.40}O_{0.10}Cl_{1.5} | 6.35× 10⁻³ | 15 | 5wt%Li₁₀GeP₂S₁₂+95wt% Li_{5.5}P_{0.96}Sb_{0.04}S_{4.40}O_{0.10}Cl_{1.5} | 8.83× 10⁻³ | 5 |
| Example 2 | Li_{5.5}P_{0.96}Sb_{0.04}S_{4.40}O_{0.10}Cl_{1.5} | 6.35× 10⁻³ | 15 | 50wt%Li₁₀GeP₂S₁₂+50wt% Li_{5.5}P_{0.96}Sb_{0.04}S_{4.40}O_{0.10}Cl_{1.5} | 9.92× 10⁻³ | 5 |
| Example 3 | Li_{5.5}P_{0.96}Sb_{0.04}S_{4.40}O_{0.10}Cl_{1.5} | 6.35× 10⁻³ | 15 | 80wt%Li₁₀GeP₂S₁₂+20wt% Li_{5.5}P_{0.96}Sb_{0.04}S_{4.40}O_{0.10}Cl_{1.5} | 10.88x 10⁻³ | 5 |
| Example 4 | Li_{5.5}P_{0.96}Sb_{0.04}S_{4.40}O_{0.10}Cl_{1.5} | 6.35× 10⁻³ | 15 | 99wt%Li₁₀GeP₂S₁₂+1wt% LiLi_{5.5}P_{0.96}Sb_{0.04}S_{4.40}O_{0.10}Cl_{1.5} | 11.35× 10⁻³ | 5 |
| Example 5 | Li_{5.5}P_{0.96}Sb_{0.04}S_{4.40}O_{0.10}Cl_{1.5} | 6.35× 10⁻³ | 15 | 80wt%Li₁₀Ge_{0.5}Sn_{0.5}P₂S₁₂+20wt% Li_{5.5}P_{0.96}Sb_{0.04}S_{4.40}O_{0.10}Cl_{1.5} | 9.93× 10⁻³ | 5 |
| Example 6 | Li_{5.5}P_{0.96}Sb_{0.04}S_{4.40}O_{0.10}Cl_{1.5} | 6.35× 10⁻³ | 15 | 80wt%Li₁₀Ge_{0.5}Si_{0.5}P₂S₁₂+20wt% Li_{5.5}P_{0.96}Sb_{0.04}S_{4.40}O_{0.10}Cl_{1.5} | 11.52× 10⁻³ | 5 |
| Example 7 | Li_{5.5}P_{0.96}Sb_{0.04}S_{4.40}O_{0.10}Cl_{1.5} | 6.35× 10⁻³ | 15 | 80wt%Li₁₀GeP₂S₁₂+20wt% Li_{5.5}P_{0.96}Sb_{0.04}S_{4.40}O_{0.10}Cl_{1.5} | 10.88x 10⁻³ | 1 |
| Example 8 | Li_{5.5}P_{0.96}Sb_{0.04}S_{4.40}O_{0.10}Cl_{1.5} | 6.35× 10⁻³ | 15 | 80wt%Li₁₀GeP₂S₁₂+20wt% Li_{5.5}P_{0.96}Sb_{0.04}S_{4.40}O_{0.10}Cl_{1.5} | 10.88x 10⁻³ | 50 |
| Example 9 | Li_{5.5}P_{0.96}Sb_{0.04}S_{4.40}O_{0.10}Cl_{1.5} | 6.35× 10⁻³ | 15 | 80wt%Li₁₀GeP₂S₁₂+20wt% Li_{5.5}P_{0.96}Sb_{0.04}S_{4.40}O_{0.10}Cl_{1.5} | 10.88x 10⁻³ | 100 |
| Example 10 | Li_{5.5}P_{0.96}Sb_{0.04}S_{4.40}O_{0.10}Cl_{1.5} | 6.35× 10⁻³ | 1 | 80wt%Li₁₀GeP₂S₁₂+20wt% Li_{5.5}P_{0.96}Sb_{0.04}S_{4.40}O_{0.10}Cl_{1.5} | 10.88x 10⁻³ | 5 |
| Example 11 | Li_{5.5}P_{0.96}Sb_{0.04}S_{4.40}O_{0.10}Cl_{1.5} | 6.35× 10⁻³ | 50 | 80wt%Li₁₀GeP₂S₁₂+20wt% Li_{5.5}P_{0.96}Sb_{0.04}S_{4.40}O_{0.10}Cl_{1.5} | 10.88x 10⁻³ | 5 |
| Example 12 | Li_{5.5}P_{0.96}Sb_{0.04}S_{4.40}O_{0.10}Cl_{1.5} | 6.35× 10⁻³ | 120 | 80wt%Li₁₀GeP₂S₁₂+20wt% Li_{5.5}P_{0.96}Sb_{0.04}S_{4.40}O_{0.10}Cl_{1.5} | 10.88x 10⁻³ | 5 |
| Example 13 | Li_{5.5}P_{0.99}Sb_{0.01}S_{4.475}O_{0.025}Cl_{1.5} | 7.82× 10⁻³ | 15 | 80wt%Li₁₀GeP₂S₁₂+20wt% Li_{5.5}P_{0.99}Sb_{0.01}S_{4.475}O_{0.025}Cl_{1.5} | 11.16× 10⁻³ | 5 |
| Example 14 | Li_{5.5}P_{0.9}Sb_{0.1}S_{4.25}O_{0.25}Cl_{1.5} | 3.33× 10⁻³ | 15 | 80wt%Li₁₀GeP₂S₁₂+20wt% Li_{5.5}P_{0.9}Sb_{0.1}S_{4.25}O_{0.25}Cl_{1.5} | 10.26× 10⁻³ | 5 |
| Example 15 | Li_{5.5}P_{0.96}Sb_{0.04}S_{4.40}O_{0.10}Cl_{1.5} | 5.45× 10⁻³ | 15 | 80wt%Li₁₀GeP₂S₁₂+20wt% Li_{5.5}P_{0.96}Sb_{0.04}S_{4.40}O_{0.10}Cl_{1.3}Br_{0.1}I_{0.1} | 10.69× 10⁻³ | 5 |
| Example 16 | Li_{5.52}P_{0.99}Bi_{0.01}S_{4.485}O_{0.015}Cl_{1.5} | 8.13× 10⁻³ | 15 | 80wt%Li₁₀GeP₂S₁₂+20wt% Li_{5.52}P_{0.99}Bi_{0.01}S_{4.485}O_{0.015}Cl_{1.5} | 11.22× 10⁻³ | 5 |
| Example 17 | Li_{5.54}P_{0.98}Bi_{0.02}S_{4.47}O_{0.03}Cl_{1.5} | 7.45× 10⁻³ | 15 | 80wt%Li₁₀GeP₂S₁₂+20wt% Li_{5.54}P_{0.98}In_{0.02}S_{4.47}O_{0.03}Cl_{1.5} | 11.09× 10⁻³ | 5 |
| Example 18 | Li_{5.7}P_{0.9}Bi_{0.1}S_{4.35}O_{0.1}Cl_{1.5} | 3.49× 10⁻³ | 15 | 80wt%Li₁₀GeP₂S₁₂+20wt% Li_{5.7}P_{0.9}Bi_{0.1}S_{4.35}O_{0.1}Cl_{1.5} | 10.29× 10⁻³ | 5 |
| Example 19 | Li_{5.54}P_{0.98}In_{0.02}S_{4.47}O_{0.03}Cl_{1.3}Br_{0.1}I_{0.1} | 6.91× 10⁻³ | 15 | 80wt%Li₁₀GeP₂S₁₂+20wt% Li_{5.54}P_{0.98}In_{0.02}S_{4.47}O_{0.03}Cl_{1.3}Br_{0.1}I_{0.1} | 10.98× 10⁻³ | 5 |
| Example 20 | Li_{5.52}P_{0.99}In_{0.01}S_{4.485}O_{0.015}Cl_{1.5} | 7.83× 10⁻³ | 15 | 80wt%Li₁₀GeP₂S₁₂+20wt% Li_{5.52}P_{0.99}In_{0.01}S_{4.485}O_{0.015}Cl_{1.5} | 11.16× 10⁻³ | 5 |
| Example 21 | Li_{5.54}P_{0.98}In_{0.02}S_{4.47}O_{0.03}Cl_{1.5} | 7.15× 10⁻³ | 15 | 80wt%Li₁₀GeP₂S₁₂+20wt% Li_{5.54}P_{0.98}In_{0.02}S_{4.47}O_{0.03}Cl_{1.5} | 11.03× 10⁻³ | 5 |
| Example 22 | Li_{5.7}P_{0.9}In_{0.1}S_{4.35}O_{0.15}Cl_{1.5} | 1.97× 10⁻³ | 15 | 80wt%Li₁₀GeP₂S₁₂+20wt% Li_{5.7}P_{0.9}In_{0.1}S_{4.35}O_{0.15}Cl_{1.5} | 9.99× 10⁻³ | 5 |
| Example 23 | Li_{5.54}P_{0.98}In_{0.02}S_{4.47}O_{0.03}Cl_{1.3}Br_{0.1}I_{0.1} | 6.28× 10⁻³ | 15 | 80wt%Li₁₀GeP₂S₁₂+20wt% Li_{5.54}P_{0.98}In_{0.02}S_{4.47}O_{0.03}Cl_{1.3}Br_{0.1}I_{0.1} | 10.85× 10⁻³ | 5 |
| Example 24 | Li_{5.53}P_{0.99}Mg_{0.01}S_{4.49}O_{0.01}Cl_{1.5} | 7.53× 10⁻³ | 15 | 80wt%Li₁₀GeP₂S₁₂+20wt% Li_{5.53}P_{0.99}Mg_{0.01}S_{4.49}O_{0.01}Cl_{1.5} | 11.11× 10⁻³ | 5 |
| Example 25 | Li_{5.56}P_{0.98}Mg_{0.02}S_{4.48}O_{0.02}Cl_{1.5} | 7.26× 10⁻³ | 15 | 80wt%Li₁₀GeP₂S₁₂+20wt% Li_{5.56}P_{0.98}Mg_{0.02}S_{4.48}O_{0.02}Cl_{1.5} | 11.06× 10⁻³ | 5 |
| Example 26 | Li_{5.8}P_{0.9}Mg_{0.01}S_{4.48}O_{0.1}Cl_{1.5} | 1.86× 10⁻³ | 15 | 80wt%Li₁₀GeP₂S₁₂+20wt% Li_{5.8}P_{0.9}Mg_{0.1}S_{4.48}O_{0.1}Cl_{1.5} | 9.97× 10⁻³ | 5 |
| Example 27 | Li_{5.56}P_{0.98}Mg_{0.02}S_{4.48}O_{0.02}Cl_{1.3}Br_{0.1}I_{0.1} | 5.67× 10⁻³ | 15 | 80wt%Li₁₀GeP₂S₁₂+20wt%Li_{5.56}P_{0.98}M g_{0.02}S_{4.48}O_{0.02}Cl_{1.3}Br_{0.1}I_{0.1} | 10.73× 10⁻³ | 5 |
| Example 28 | Li_{5.5}P_{0.96}Sb_{0.04}S_{4.40}O_{0.10}Cl_{1.5} | 6.12× 10⁻³ | 15 | 80wt%Li₁₀GeP₂S₁₂+20wt% Li_{5.5}P_{0.96}Sb_{0.04}S_{4.40}O_{0.10}Cl_{1.5} | 8.82× 10⁻³ | 5 |
| Example 29 | Li_{5.5}P_{0.96}Sb_{0.04}S_{4.40}O_{0.10}Cl_{1.5} | 5.83× 10⁻³ | 15 | 80wt%Li₁₀GeP₂S₁₂+20wt% Li_{5.5}P_{0.96}Sb_{0.04}S_{4.40}O_{0.10}Cl_{1.5} | 7.56× 10⁻³ | 5 |
| Example 30 | Li_{5.5}P_{0.96}Sb_{0.04}S_{4.40}O_{0.10}Cl_{1.5} | 4.32× 10⁻³ | 15 | 80wt%Li₁₀GeP₂S₁₂+20wt% Li_{5.5}P_{0.96}Sb_{0.04}S_{4.40}O_{0.10}Cl_{1.5} | 8.46× 10⁻³ | 5 |
| Example 31 | Li_{5.5}P_{0.96}Sb_{0.04}S_{4.40}O_{0.10}Cl_{1.5} | 4.56× 10⁻³ | 15 | 80wt%Li₁₀GeP₂S₁₂+20wt% Li_{5.5}P_{0.96}Sb_{0.04}S_{4.40}O_{0.10}Cl_{1.5} | 8.51× 10⁻³ | 5 |
| Example 32 | Li_{5.5}P_{0.96}Sb_{0.04}S_{4.40}O_{0.10}Cl_{1.5} | 4.85× 10⁻³ | 15 | 80wt%Li₁₀GeP₂S₁₂+20wt% Li_{5.5}P_{0.96}Sb_{0.04}S_{4.40}O_{0.10}Cl_{1.5} | 8.57× 10⁻³ | 5 |
| Compara tive Example 1 | Li_{5.5}PS_{4.5}Cl_{1.5} | 9.12× 10⁻³ | 15 | 80wt%Li₁₀GeP₂S₁₂+20wt% Li_{5.5}PS_{4.5}Cl_{1.5} | 11.42× 10⁻³ | 5 |
| Compara tive Example 2 | Li_{5.5}P_{0.96}Sb_{0.04}S_{4.40}O_{0.10}Cl_{1.5} | 6.35× 10⁻³ | 15 | | | |
| Compara tive Example 3 | | | | 80wt%Li₁₀GeP₂S₁₂+20wt% Li_{5.5}P_{0.96}Sb_{0.04}S_{4.40}O_{0.10}Cl_{1.5} | 10.88x 10⁻³ | 5 |

In the disclosure, performance tests are conducted on all-solid-state batteries prepared with different solid electrolyte membranes in Examples 1 to 32 and Comparative Examples 1 to 3.

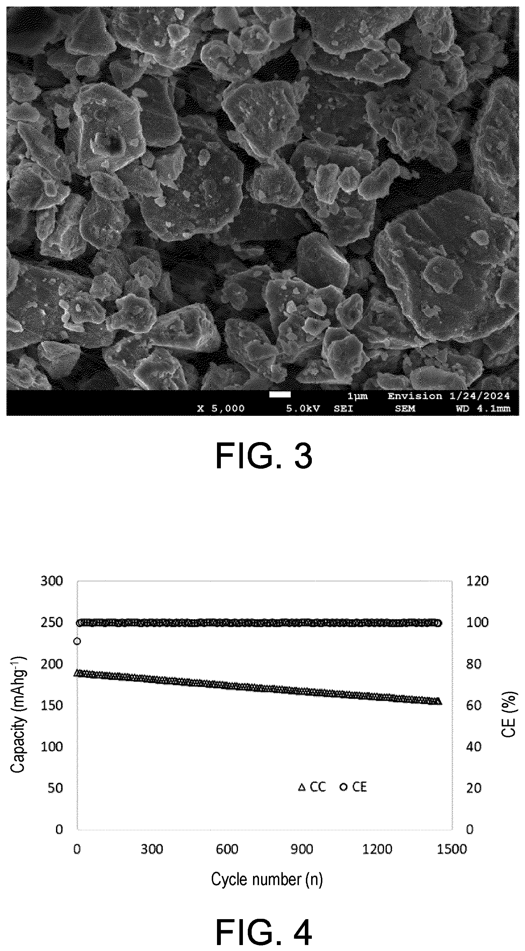

Referring to FIG. 3, in one example of the disclosure, for example, the morphology of the solid electrolyte membrane in Example 3 is characterized through a scanning electron microscope. The magnification of the scanning electron microscope is, for example, 5000 times. From FIG. 3, it may be known that the first solid electrolyte layer and the second solid electrolyte layer prepared by powder extrusion molding method have good self-supporting performance, and are able to stably exist between the negative electrode and the positive electrode, thereby facilitating better performance of the solid electrolyte membrane.

Referring to FIG. 4, in one example of the disclosure, for example, room temperature cycle performance testing is conducted on the all-solid-state battery in Example 3. Specifically, at 25°C, the all-solid-state battery is subjected to cyclic charge and discharge at a charge/discharge rate of 1C/1C within a specified voltage range of 2.5V to 4.3V to obtain capacity (CC) and Coulombic Efficiency (CE) under different cycle numbers. From FIG. 4, it may be known that with the increase of cycle number, the decay trend of battery capacity is relatively gentle, and the Coulombic Efficiency of the battery has no fluctuation and is stable at around 100%, thereby indicating that the cycle performance of the battery is good.

Referring to Table 2, in one example of the disclosure, for example, room temperature cycle stability testing is conducted on the all-solid-state batteries in Examples 1 to 32 and Comparative Examples 1 to 3. Specifically, at 25°C, the all-solid-state batteries are subjected to cyclic charge and discharge at a charge/discharge rate of 1C/1C within a specified voltage range of 2.5V to 4.3V. When the battery capacity reaches 80% State of Health (SOH) of the first cycle capacity, the test is terminated, and the room temperature cycle number of turns of the battery is recorded. The recorded results are as shown in Table 2.

**Table 2. Test results of the all-solid-state batteries in Examples 1 to 32 and Comparative Examples 1 to 3**

| Group | Room temperature cycle number of turns (80% SOH) |
|---|---|
| Example 1 | 736 |
| Example 2 | 948 |
| Example 3 | 1446 |
| Example 4 | 1224 |
| Example 5 | 1360 |
| Example 6 | 1393 |
| Example 7 | 886 |
| Example 8 | 1278 |
| Example 9 | 1313 |
| Example 10 | 728 |
| Example 11 | 1401 |
| Example 12 | 1362 |
| Example 13 | 1041 |
| Example 14 | 1022 |
| Example 15 | 1211 |
| Example 16 | 999 |
| Example 17 | 1393 |
| Example 18 | 1116 |
| Example 19 | 1191 |
| Example 20 | 1027 |
| Example 21 | 1411 |
| Example 22 | 1087 |
| Example 23 | 1145 |
| Example 24 | 975 |
| Example 25 | 1377 |
| Example 26 | 1042 |
| Example 27 | 1091 |
| Example 28 | 1347 |
| Example 29 | 1307 |
| Example 30 | 1212 |
| Example 31 | 1281 |
| Example 32 | 1304 |
| Comparative Example 1 | 82 |
| Comparative Example 2 | 553 |
| Comparative Example 3 | 29 |

Referring to Table 1 and Table 2, comparing Example 3, Comparative Example 2, and Comparative Example 3, it may be known that if two first solid electrolyte layers are used alone as the solid electrolyte membrane, the room temperature cycle number of turns of the battery is 553. If the second solid electrolyte layer is used alone as the solid electrolyte membrane, the room temperature cycle number of turns of the battery is only 29. However, if the first solid electrolyte layer, the second solid electrolyte layer, and the first solid electrolyte layer are sequentially composited as the solid electrolyte membrane, the room temperature cycle number of turns of the battery increases to 1146, thereby indicating that, in the solid electrolyte membrane, the first electrolyte in the first solid electrolyte layer may improve the interfacial stability between the solid electrolyte membrane and the negative electrode, ensuring continuous good lithium ion transport channels, while the second electrolyte in the second solid electrolyte layer may consume lithium dendrites, prevent penetration of lithium dendrites, avoid short circuit of the battery, thereby enhancing the cycle performance of the battery.

Referring to Table 1 and Table 2, comparing Examples 1 to 4, it may be known that with the increase of the ratio of the second electrolyte Li₁₀GeP₂S₁₂ in the second solid electrolyte layer, the ionic conductivity of the second solid electrolyte layer gradually increases, and the room temperature cycle number of turns of the battery first increases gradually, then decreases gradually. That is, the cycle performance of the battery shows a trend of first increasing and then decreasing. Therefore, by controlling the content of the second electrolyte in the second solid electrolyte layer, the cycle performance of the battery may be improved.

Referring to Table 1 and Table 2, comparing Examples 3, 5, and 6, it may be known that among the three second electrolytes Li₁₀GeP₂S₁₂, Li₁₀Ge_{0.5}Sn_{0.5}P₂S₁₂, and Li₁₀Ge_{0.5}Si_{0.5}P₂S₁₂, the battery assembled with Li₁₀GeP₂S₁₂ as the second electrolyte has the maximum room temperature cycle number of turns, thereby indicating that, in the second electrolyte Li₁₀Ge₁₋ᵢGᵢP₂S₁₂, when i is 0, the cycle performance of the battery is optimal. Therefore, by controlling the doping amount of Ge and G elements in the second electrolyte, the cycle performance of the battery may be improved.

Referring to Table 1 and Table 2, comparing Example 3 and Examples 7 to 9, it may be known that with the thickness of the second solid electrolyte layer increasing from 1µm to 100µm, the room temperature cycle number of turns of the battery first increases gradually, then decreases gradually. That is, the cycle performance of the battery shows a trend of first increasing and then decreasing. Referring to Table 1 and Table 2, comparing Example 3 and Examples 10 to 12, it may be known that with the thickness of the first solid electrolyte layer increasing from 1µm to 120µm, the room temperature cycle number of turns of the battery first increases gradually, then decreases gradually. That is, the cycle performance of the battery shows a trend of first increasing and then decreasing. Therefore, by controlling the thickness of the first solid electrolyte layer and the second solid electrolyte layer, the cycle performance of the battery may be improved.

Referring to Table 1 and Table 2, comparing Examples 3, 13, and 14, it may be known that with the increase of the doping amount of Sb element in the first electrolyte, the ionic conductivity of the first solid electrolyte layer and the second solid electrolyte layer gradually decreases, the room temperature cycle number of turns of the battery first increases gradually, then decreases gradually. That is, the cycle performance of the battery shows a trend of first increasing and then decreasing. Referring to Table 1 and Table 2, comparing Examples 16 to 18, it may be known that with the increase of the doping amount of Bi element in the first electrolyte, the ionic conductivity of the first solid electrolyte layer and the second solid electrolyte layer gradually decreases, the room temperature cycle number of turns of the battery first increases gradually, then decreases gradually. That is, the cycle performance of the battery shows a trend of first increasing and then decreasing. Referring to Table 1 and Table 2, comparing Examples 20 to 22, it may be known that with the increase of the doping amount of In element in the first electrolyte, the ionic conductivity of the first solid electrolyte layer and the second solid electrolyte layer gradually decreases, the room temperature cycle number of turns of the battery first increases gradually, then decreases gradually. That is, the cycle performance of the battery shows a trend of first increasing and then decreasing. Therefore, by controlling the doping amount of M element in the first electrolyte, the cycle performance of the battery may be improved.

Referring to Table 1 and Table 2, comparing Examples 24 to 26, it may be known that with the increase of the doping amount of Mg element in the first electrolyte, the ionic conductivity of the first solid electrolyte layer and the second solid electrolyte layer gradually decreases, the room temperature cycle number of turns of the battery first increases gradually, then decreases gradually. That is, the cycle performance of the battery shows a trend of first increasing and then decreasing. Therefore, by controlling the doping amount of E element in the first electrolyte, the cycle performance of the battery may be improved.

Referring to Table 1 and Table 2, comparing Examples 3 and 15, Examples 17 and 19, Examples 21 and 23, and Examples 25 and 27, it may be known that when the doping amount of Sb, In, Bi, or Mg element in the first electrolyte is the same, if Br and I elements are doped in the first electrolyte, the ionic conductivity of the first solid electrolyte layer and the second solid electrolyte layer decreases, and the room temperature cycle number of turns of the battery also decreases. That is, the cycle performance of the battery is declined. Therefore, by controlling the number of element types included in X or Q in the first electrolyte, the cycle performance of the battery may be improved.

Referring to Table 1 and Table 2, comparing Examples 3, Example 17, Example 21, Example 25, and Comparative Example 1, it may be known that when Sb, Bi, In, or Mg element is not doped in the first electrolyte, the ionic conductivity of the first solid electrolyte layer and the second solid electrolyte layer increases, but the room temperature cycle number of turns of the battery is only 82, with almost no cycle performance, thereby indicating that, the Sb, Bi, In, or Mg element doped in the first solid electrolyte layer and the second solid electrolyte layer may significantly enhance the cycle performance of the battery. Therefore, by controlling the element types of M or E in the first electrolyte, the cycle performance of the battery may be improved.

Referring to Table 1 and Table 2, comparing Examples 3, Example 28, and Example 29, it may be known that the different first binders adopted in the preparation process of the first solid electrolyte layer and the second solid electrolyte layer result in different ionic conductivity of the first solid electrolyte layer and the second solid electrolyte layer, and also result in different cycle performance of the battery. Specifically, when the first binder adopts PTFE, the ionic conductivity of the first solid electrolyte layer and the second solid electrolyte layer is maximum, the room temperature cycle number of turns of the battery is also maximum, that is, the cycle performance of the battery is best.

Referring to Table 1 and Table 2, comparing Example 3 and Examples 30 to 32, it may be known that the different preparation methods of the first solid electrolyte layer and the second solid electrolyte layer result in different ionic conductivity of the first solid electrolyte layer and the second solid electrolyte layer, and also result in different cycle performance of the battery. Specifically, in comparison with the wet coating method, the first solid electrolyte layer and the second solid electrolyte layer prepared by the powder extrusion molding method have maximum ionic conductivity, and the battery assembled therefrom has the maximum room temperature cycle number of turns, that is, the cycle performance is best.

The disclosure further provides an electronic device, the electronic device includes at least one of the all-solid-state batteries, and the all-solid-state battery is used for providing electrical energy. In an example, the electronic device may be a vehicle, mobile phone, portable device, laptop computer, ship, spacecraft, electric toy, and electric tool. In one example of the disclosure, the vehicle is, for example, a new energy vehicle, and the new energy vehicle may be a pure electric vehicle, hybrid vehicle, or range-extended vehicle. The spacecraft includes, for example, aircraft, rocket, space shuttle, and spaceship. The electric toy includes fixed or mobile electric toys, for example, including game console, electric car toy, electric ship toy, and electric aircraft toy. The electric tool includes metal cutting electric tool, grinding electric tool, assembly electric tool, and railway electric tool, for example, including electric drill, electric grinder, electric wrench, electric screwdriver, electric hammer, impact drill, concrete vibrator, and electric planer. The electronic device includes the all-solid-state battery, therefore includes the advantages of the all-solid-state battery, so details will not be repeated here.

In summary, the disclosure provides an all-solid-state battery and application thereof, through compositing the first solid electrolyte layer, the second solid electrolyte layer, and the first solid electrolyte layer, a symmetric self-supporting solid electrolyte membrane is prepared, which can improve the interfacial stability between the solid electrolyte membrane and the negative electrode, thereby reducing interfacial impedance and improving charge transfer efficiency. At the same time, the disclosure can improve the lithium dendrite penetration resistance performance of the solid electrolyte membrane, avoid short circuit of the battery, thereby ensuring that the battery can operate stably and safely under high rate. At the same time, the ionic conductivity of the solid electrolyte membrane may be improved, thereby improving the working efficiency of the battery. Moreover, the cycle performance of the battery may be improved and the service life of the battery may be extended.

## Claims

1. An all-solid-state battery (10), comprising:
at least two first solid electrolyte layers (131) respectively disposed on a positive electrode (11) side and a negative electrode (12) side of the all-solid-state battery (10), wherein an ionic conductivity of a first solid electrolyte layer (131) is 1×10⁻³S/cm to 1×10⁻²S/cm; and
a second solid electrolyte layer (132) disposed between the two first solid electrolyte layers (131), wherein an ionic conductivity of the second solid electrolyte layer (132) is 1×10⁻³S/cm to 2×10⁻²S/cm.

2. The all-solid-state battery (10) according to claim 1, wherein the first solid electrolyte layer (131) comprises a first electrolyte, wherein a chemical formula of the first electrolyte is LiₐP_{1-b}M_{b}S_{c}O_{d}Xₑ, 5<a<6, 0<b<1, 1.5<c<5, 0<d<2.5, 4<c+d<5, 1<e<2, M is selected from at least one of Al, Ga, In, Ti, Sc, As, Sb, Bi, As, V, or Nb, and X is selected from at least one of Cl, Br, or I.

3. The all-solid-state battery (10) according to claim 2, wherein M is selected from at least one of Sb, In, or Bi, X is Cl, and a range of b is 0<b<0.1.

4. The all-solid-state battery (10) according to claim 1, wherein the first solid electrolyte layer (131) comprises a first electrolyte, a chemical formula of the first electrolyte is Li_{f}P_{1-g}E_{g}S_{w}O_{g}Q_{z}, 5<f<10, 0<g<1, 3<w<6, 4<w+g<6, 0<z<2, E is selected from at least one of Mg, Ca, Sr, Ba, Zn, Cr, Sn, or Pb, and Q is selected from at least one of Cl, Br, or I.

5. The all-solid-state battery (10) according to claim 4, wherein E is Mg, Q is Cl, and a range of g is 0.01≤g≤0.1.

6. The all-solid-state battery (10) according to any one of claims 2 to 5, wherein the second solid electrolyte layer (132) comprises the first electrolyte and a second electrolyte, a chemical formula of the second electrolyte is Li₁₀Ge₁₋ᵢGᵢP₂S₁₂, 0≤i<1, and G is selected from at least one of Si or Sn.

7. The all-solid-state battery (10) according to claim 6, wherein in the second solid electrolyte layer (132), a content of the first electrolyte is 1wt% to 95wt%, and a content of the second electrolyte is 5wt% to 99wt%.

8. The all-solid-state battery (10) according to claim 1, wherein a thickness of the first solid electrolyte layer (131) is 1µm to 120µm.

9. The all-solid-state battery (10) according to claim 1, wherein a thickness of the second solid electrolyte layer (132) is 1µm to 100µm.

10. An electronic device, comprising the all-solid-state battery (10) according to any one of claims 1 to 9.
